# EUROPÄISCHE PATENTANMELDUNG

(11) **EP 1 135 984 A2**
(43) Veröffentlichungstag der Anmeldung: **26.09.2001**
(21) Anmeldenummer: 01107009.1
(22) Anmeldetag: 20.03.2001
(51) Int. Cl.: A21C 1/14

(54) **Knetbehälter für die Teigzubereitung**

(30) Priorität: 24.03.2000 DE 20005553 U
(71) Anmelder: herzberger Bäckerei GmbH, 36039 Fulda (DE)
(72) Erfinder: Schlinzig, Eckhart, Dr., 53783 Eitorf (DE); Gutberlet, Wolfgang, 36160 Dipperz (DE)
(74) Vertreter: Schlagwein, Udo, Dipl.-Ing.

(57) **Zusammenfassung**

Ein Knetbehälter (1) für die Teigzubereitung, insbesondere in Bäckereien, hat eine obere Öffnung (2) und darüber Zuführungen (3, 4) für Teigzutaten, insbesondere Mehl und Wasser. Die Zuführung (4) für das Wasser weist Düsen (6, 7) auf, welche zur Bildung eines die Öffnung (2) zumindest weitgehend ausfüllenden Wasserschleiers (8) entlang des Umfangs der Öffnung (2) radial zu dem Knetbehälter (1) ausgerichtet sind.

## Beschreibung

Die Erfindung betrifft einen Knetbehälter für die Teigzubereitung, insbesondere in Bäckereien, welcher eine obere Öffnung und darüber Zuführungen für Teigzutaten, insbesondere Mehl und Wasser, hat.

Knetbehälter der vorstehenden Art werden in Bäckereien und Fabriken für Backwaren verwendet und sind deshalb bekannt. Meist werden die Teigzutaten computergesteuert mittels Dosierern in der jeweils erforderlichen Menge aus Silos entnommen und über Rohrleitungen zum jeweiligen Knetbehälter geführt. Das Wasser läuft üblicherweise über ein schräg in den Knetbehälter hinein gerichtetes Rohr aus einer Leitung in den Knetbehälter. Da Mehl sehr stark zu einer Staubbildung neigt, wenn es nach dem Hereinfallen in den Knetbehälter auf den Behälterboden oder auf die dort bereits eingefüllten Teigzutaten auftrifft, wird der Knetbehälter üblicherweise mit einem ihn vollständig verschließenden Deckel versehen, durch den die Zuführungen hindurchführen. Ein solcher Deckel hat jedoch den Nachteil, dass dann das Einfüllen der Teigzutaten nicht mehr zu beobachten ist und dass sich am Deckel innenseitig Mehlreste und andere Teigzutaten sammeln, so dass der Deckel relativ häufig gereinigt werden muss. Ein Arbeiten ohne Deckel führt in der Regel jedoch zu einer unzulässig hohen Verunreinigung der Umgebung des Knetbehälters durch Teigzutaten, insbesondere Mehlstaub. Auch bei geschlossenem Behälter treten solche Teigzutaten, vor allem Mehlstaub, durch Öffnungen und Spalte am Rand der Zuführeinrichtungen in die Backstube aus.

Der Erfindung liegt das Problem zugrunde, einen Knetbehälter der eingangs genannten Art so zu gestalten, dass eine Zufuhr der Teigzutaten ohne Abdeckung des Knetbehälters möglich ist, ohne dass dabei Teigzutaten in die Umgebung des Knetbehälters gelangen.

Dieses Problem wird erfindungsgemäß dadurch gelöst, dass die Zuführung für das Wasser Düsen aufweist, welche zur Bildung eines die Öffnung zumindest weitgehend ausfüllenden Wasserschleiers entlang des Umfangs der Öffnung radial zu dem Knetbehälter ausgerichtet sind.

Gemäß der Erfindung werden das Wasser und die anderen Teigzutaten, insbesondere das Mehl, gleichzeitig dem Knetbehälter zugeführt. Durch die einen Wasserschleier bildenden Düsen wird das in den Knetbehälter hineinfallende Mehl schon während des freien Falls in den Knetbehälter sehr intensiv von dem Wasser des Wasserschleiers angefeuchtet, so dass es beim Auftreffen auf den Behälterboden nicht mehr zu einer Staubbildung kommt. Noch nicht angefeuchtete und im Behälter deshalb aufwirbelnde Anteile des Mehls können nicht aus dem Knetbehälter herausgelangen, weil sie durch den einen Staubverschluss bildenden Wasserschleier daran gehindert werden. Der erfindungsgemäße Knetbehälter ermöglicht es deshalb, die Zutaten bei offenem Knetbehälter einzufüllen, ohne dass es zu einer Verunreinigung der Umgebung durch Teigzutaten kommen kann. Weiterhin verkürzt sich die Knetzeit, weil die Teigzutaten schon während des Einfüllens gleichmäßig und intensiv angefeuchtet werden, wodurch sich aktive Reaktionsflächen bilden. Dank der Erfindung wird nicht erst während des Knetens ein Austritt von durch den Kneter aufgewirbeltem Mehl, sondern schon beim Eingeben von Mehl in einen Knetbehälter ein Austritt von Mehlstaub zuverlässig verhindert.

Die in den Knetbehälter fallenden Teigzutaten sind während des Falls besonders lang der Möglichkeit einer Benetzung durch das Wasser ausgesetzt, wenn gemäß einer vorteilhaften Weiterbildung der Erfindung die Düsen zusätzlich zur radialen Ausrichtung schräg nach unten in den Knetbehälter hinein ausgerichtet sind.

Die Düsen können im oberen Bereich des Knetbehälters freitragend angebracht sein. Besonders kostengünstig ist die Erfindung zu verwirklichen, wenn die Düsen an einer entlang der Innenmantelfläche des Knetbehälters verlaufenden Ringleitung angeordnet sind. Eine solche Ausführungsform erlaubt ein kostengünstiges Umrüsten bereits vorhandener Wasserzuführeinrichtungen.

Die Ringleitung braucht sich nur während der Teigzubereitung im Knetbehälter zu befinden, so dass sie bei anderen Arbeiten nicht stört, wenn der Knetbehälter relativ zur Ringleitung durch eine Hubeinrichtung höhenverfahrbar angeordnet ist.

Alternativ lässt sich der gleiche Vorteil auch dadurch erreichen, dass die Ringleitung über einen flexiblen Schlauch mit einer Wasserzuführung verbunden und durch sie haltende Lenker in den Knetbehälter einführbar gehalten ist.

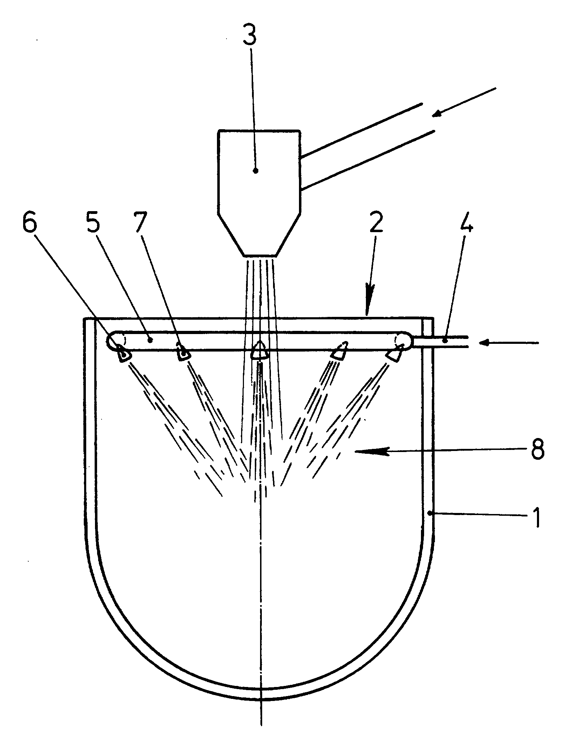

Die Erfindung lässt verschiedene Ausführungsformen zu. Eine davon ist schematisch in der Zeichnung dargestellt und wird nachfolgend beschrieben.

Die Zeichnung zeigt einen im Querschnitt kreisförmigen Knetbehälter 1, welcher nach oben hin offen ist und deshalb dort über seinen vollen Querschnitt eine Öffnung 2 aufweist. Oberhalb der Öffnung 2 ist eine Zuführung 3 für Mehl dargestellt. Am oberen Rand des Knetbehälters 1 ist eine Zuführung 4 für die dosierte Zuführung von Wasser vorgesehen. Weitere Zuführungen für andere Teigzutaten, beispielsweise Salz oder Sauerteig, sind nicht gezeigt. Die Zuführung 4 mündet in eine Ringleitung 5, die entlang der Innenmantelfläche des Knetbehälters nahe seiner Öffnung 2 verläuft und einzelne Düsen 6, 7 trägt, welche radial in den Knetbehälter 1 hinein und gleichzeitig schräg nach unten ausgerichtet sind. Diese Düsen 6, 7 bilden einen den Querschnitt der Öffnung 2 zumindest weitgehend ausfüllenden Wasserschleier 8.

Wenn während des Eindüsens von Wasser über die Düsen 6, 7 gleichzeitig Mehl aus der Zuführung 3 in den Knetbehälter 1 fällt, dann wird das Mehl vor dem Auftreffen auf den Boden des Knetbehälters vom Wasser intensiv benetzt, so dass es nicht zu einem Aufwirbeln des Mehls kommen kann.

Nicht gezeigt ist, dass der Knetbehälter relativ zur Ringleitung durch eine Hubeinrichtung höhenverfahrbar angeordnet sein kann, damit die Ringleitung mit den Düsen im Knetbehälter nicht stört, wenn die Teigzubereitung abgeschlossen ist. Das gleiche Ziel kann man auch erreichen, wenn die Ringleitung über einen flexiblen Schlauch mit einer Wasserzuführung verbunden und durch sie haltende Lenker in den Knetbehälter einführbar gehalten ist.

### Bezugszeichenliste

- 1: Knetbehälter
- 2: Öffnung
- 3: Zuführung
- 4: Zuführung
- 5: Ringleitung

- 6: Düse
- 7: Düse
- 8: Wasserschleier

## Patentansprüche

1. Knetbehälter (1) für die Teigzubereitung, insbesondere in Bäckereien, welcher eine obere Öffnung (2) und darüber Zuführungen (3, 4) für Teigzutaten, insbesondere Mehl und Wasser, hat, **dadurch gekennzeichnet, dass** die Zuführung (4) für das Wasser Düsen (6, 7) aufweist, welche zur Bildung eines die Öffnung (2) zumindest weitgehend ausfüllenden Wasserschleiers (8) entlang des Umfangs der Öffnung (2) radial zu dem Knetbehälter (1) ausgerichtet sind.

2. Knetbehälter nach Anspruch 1, **dadurch gekennzeichnet, dass** die Düsen (6, 7) zusätzlich zur radialen Ausrichtung schräg nach unten in den Knetbehälter (1) hinein ausgerichtet sind.

3. Knetbehälter nach den Ansprüchen 1 oder 2, **dadurch gekennzeichnet, dass** die Düsen (6, 7) an einer entlang der Innenmantelfläche des Knetbehälters (1) verlaufenden Ringleitung (5) angeordnet sind.

4. Knetbehälter nach zumindest einem der vorangehenden Ansprüche, **dadurch gekennzeichnet, dass** er relativ zur Ringleitung (5) durch eine Hubeinrichtung höhenverfahrbar angeordnet ist.

5. Knetbehälter nach zumindest einem der vorangehenden Ansprüche, **dadurch gekennzeichnet, dass** die Ringleitung (5) über einen flexiblen Schlauch mit einer Wasserzuführung verbunden und durch sie haltende Lenker in den Knetbehälter einführbar gehalten ist.
